# EUROPÄISCHE PATENTSCHRIFT

(11) **EP 1 339 772 B1**
(45) Veröffentlichungstag und Bekanntmachung des Hinweises auf die Patenterteilung: **12.01.2011**
(21) Anmeldenummer: 01997515.0
(22) Anmeldetag: 20.11.2001
(51) Int. Cl.: C08G 61/12, C08L 65/00, C09D 5/24, H01B 1/12

(54) **DISPERGIERBARE POLYMERPULVER**
DISPERSIBLE POLYMER POWDERS
POUDRES POLYMERES DISPERSIBLES

(30) Priorität: 22.11.2000 DE 10058118; 09.11.2001 DE 10155238
(43) Veröffentlichungstag der Anmeldung: 03.09.2003
(60) Teilanmeldung: 10011944.5
(73) Patentinhaber: H.C. Starck Clevios GmbH, 38642 Goslar (DE)
(72) Erfinder: WESSLING, Bernhard, 22941 Bargteheide (DE); KIRCHMEYER, Stephan, 51375 Leverkusen (DE); GEHRMANN, Dietrich, 51381 Leverkusen (DE)
(74) Vertreter: Herzog, Martin
(86) Internationale Anmeldenummer: PCT/EP2001/013390
(87) Internationale Veröffentlichungsnummer: WO 2002/042352

(56) Entgegenhaltungen:
- WO-A-00/27909
- DATABASE CAPLUS [Online] CHEMICAL ABSTRACTS SERVICE, COLUMBUS, OHIO, US; LEFEBVRE, MARK: "Chemical Synthesis, Characterization, and Electrochemical Studies of Poly(3,4-ethylenedioxythiophene)/Poly(styr ene-4-sulfonate) Composites" retrieved from STN Database accession no. 1999:41052 XP002196916 & CHEM. MATER., Bd. 11, Nr. 2, 1999, Seiten 262-268,

## Beschreibung

Die Erfindung betrifft dispergierbare Polymerpulver, ihre Herstellung und Verwendung.

Organische, leitfähige Polymere haben in der Technik mehr und mehr Verbreitung gefunden. Einsatzgebiete sind z.B. die Durchkontaktierung von Leiterplatten (EP-A-553 671), Antistatikausrüstung fotografischer Filme (EP-A-440 657) oder als Elektrode in Feststoffelektrokondensatoren (EP-A-340 512). Besondere Bedeutung haben Poly-3,4-alkylendioxythiopene erlangt, die sich durch hohe Stabilität und elektrische Leitfähigkeit auszeichnen.

In EP-A-440 657 werden wasserlösliche bzw. wasserdispergierbare Polyalkylendioxythiophene beschrieben. Diese werden direkt in Gegenwart von Polyanionen vorzugsweise Polystyrolsulfonsäure in wässriger Phase synthetisiert. Die wässrigen Zubereitungen werden zur Herstellung leitfähiger bzw. antistatischer Beschichtungen eingesetzt.

Aus EP-A-329 768 sind Polymerpulver enthaltend ein organisches Polymer, beispielsweise Polythiophen, bekannt. Gemäß Beispiel 2 können sie unter Verwendung von Nitropropan oder Nitromethan als Lösungsmittel/Dispergiermittel hergestellt werden.

Aus Mol. Cryst. Liq. Cryst. 1999, Vol. 327, Seiten 237-240, ist der Versuch bekannt, Poly(3,4-ethylendioxythiophen) in Gegenwart von Dodecylbenzolsulfonsäure in Lösungsmitteln zu polymerisieren, das erhaltene Poly(3,4-ethylendioxythiophen) zu filtern und mittels Ultraschall und Zusatz des Dispergierhilfsmittels Dodecylbenzolsulfonsäure in Lösungsmitteln zu lösen. Die so hergestellten Polythiophene waren jedoch nicht oder nur teilweise löslich.

Die Ereindung betrifft ein in Wasser dispergierbares Pulver, enthaltend im Wesentlichen Polymere T mit wiederkehrenden Thiopheneinheiten und mindestens ein weiteres polyanionisches Polymer P. Das polyanionische Polymer P kann als Salz oder Säure vorliegen. Die Teilchengröße des Pulvers ist kleiner als 1 µm.

In einer bevorzugten Ausfübrungsform ist das Pulver dadurch gekennzeichnet, dass die Polymere T erhalten werden durch Polymerisation von Thiophenen der allgemeinen Formel 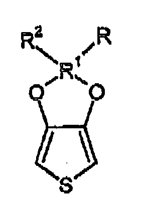 in der
- R¹: für einen gegebenenfalls substituierten Alkylenrest mit 1 bis 10 Kohlenstoff- atomen, insbesondere -CH₂-CH₂- und
- R und R²: gleich oder verschieden für Wasserstoff, einen linearen oder verzweigten Alkylrest mit 1 bis 20 Kohlenstoffatomen, OH, O-CH₂-CH₂-CH₂-SO₃H oder O-Alkyl mit 1 - 18 C-Atomen stehen.

Besonders bevorzugt ist Ethylendioxythiophen.

In einer weiteren bevorzugten Ausführungsform ist das Pulver dadurch gekennzeichnet, dass das Polymer P mindestens eine oder mehrere Sulfonsäuregruppen oder ein Salz davon aufweist und insbesondere Polystyrolsulfonsäure oder ein Salz davon ist. Erfindungsgemäße Pulver können dadurch gewonnen werden, dass man aus einer kolloidalen Dispersion der Polymere das Wasser so entfernt, dass die Teilchenstruktur der kolloidalen Teilchen im Wesentlichen erhalten bleibt

In einer bevorzugten Ausführungsform handelt es sich um redispergierbare Pulver, d.h. dass sie aus einer Dispersion gewonnen wurden und das so erhaltene Pulver wieder dispergiert werden kann. Dispergierbar und redispergierbare Pulver im Sinne der vorliegenden Erfindung zeichnen sich dadurch aus, dass die aus ihnen erhaltenen Dispersionen in einem Dispergiermedium stabile Dispersionen sind, die wenigstens 4 Wochen, insbesondere wenigstens 6 Monate keine oder keine wesentlichen Änderungen ihrer Eigenschaften bei Lagerung bei 20°C aufweisen. Das Verfahren zum Herstellen dispergierbarer Pulver ist dadurch gekennzeichnet, dass man eine Dispersion oder Lösung enthaltend Polymere P mit wiederkehrenden Thiopheneinheiten und mindestens einem weiteren polyanionischen Polymer P gefritergetrocknet. Hierzu sind folgende Ausführungsformen besonders bevorzugt:
Eine Ausführungsform ist dadurch gekennzeichnet, dass man die Dispersion oder Lösung in eine Tropfchenform übetführt, eingefroren und dann gefriergetrocknet wird.
Eine Ausführungsform ist dadurch gekennzeichnet, dass die Lösung oder Dispersion durch eine Düse zerstäubt wird.
Eine weitere Ausführungsform ist dadurch gekennzeichnet, dass die Lösung oder Dispersion geprillt wird.
Eine weitere Ausführungsform ist dadurch gekennzeichnet, dass die Lösung oder Dispersion eingefroren, mechanisch zerteilt und dann, gefriergetrocknet wird.

Die Gefriertrocknung der Dispersionen oder Lösungen kann nach allgemein bekannten Verfahren vorgenommen werden, insbesondere gemäß "Trocknungstechnik", Zweiter Band, Springerverlag, Berlin Heidelberg New York London Tokyo 1978, S. 523 - 525: Gefriertrocknungstunnel, Etagenschwingbodentrockner oder in "Trocknungstechnik", Dritter Band, Springerverlag, Berlin Heidelberg New York London Tokyo 1989: S. 189-190: Kratzkühler, Einfrierband, Tellertrockner oder in "Handbook of Industrial Drying", second edition revised and extended, Vol. 1. Ed. By Arun S. Mujumdar, Marcel Dekker, Inc. New York, Basel, Hong Kong, 1995, S. 323 -326, Tunnel Freeze Dryers, Vacuum-spray freeze dryer, beschrieben sind.

In einer Ausführungsform wird das Bulk-Gefriertrocknungsverfahren verwendet, indem man Lösung in Vials abfüllt und in dieser Form auf einer gekühlten Platte einfriert und anschließend im Vakuum trocknet. Dabei wird das gefrorene Lösungsmittel (hier Wasser) durch Sublimation direkt aus dem gefrorenen Zustand in die Dampfphase überführt und die Lösung auf diese Weise vom Wasser befreit. Die Sublimation findet vorzugsweise bei Produkttemperaturen zwischen -5°C und -50°C statt.

In einer weiteren bevorzugten Ausführungsform wird das Sprühgefriertrocknungsverfahren verwendet, indem durch Zertropfen der Lösung in Flüssigstickstoff oder in verdampfenden Stickstoff ein schockgefrorenes Mikrogranulat erzeugt und dieses Granulat auf einer beheizten Platte im Vakuum gefriergetrocknet. Durch das sehr schnelle Einfrieren der Tropfen entsteht eine andere Eiskristallstruktur als beim Bulkverfahren (langsames Einfrieren). Die Kristallstruktur des gefrorenen Produkts beeinflusst das Trocknungsverhalten und häufig auch die Produkteigenschaften.

In einer weiteren bevorzugten Ausführungsform wird die Lösung oder Dispersion auf eine gekühlte Walze aufgetragen, beispielsweise dadurch, dass die Walze in die Lösung bzw. Dispersion eintaucht. Die Lösung bzw. Dispersion gefriert zum Teil an der Walze und wird während der Rotation der Walze von der Walze in Form von sogenannten Schuppen entfernt. Diese Schuppen werden mit einem geeigneten Fördermedium, beispielsweise einem Förderband, in gefrorenen Zustand in einen Gefriertrocknungsraum eingebracht. In diesen wird in einer bevorzugten Ausfuhrungsform in einer ersten Zone das anhaftende Lösungsmittel bzw. Dispergiermedium (im allgemeinen Wasser) durch Sublimation entfernt, in einer anschließenden Zone kann adsorptiv gebundenes Dispergier- bzw. Lösungsmittel durch Erhöhung der Temperatur entfernt werden. Das abgetriebene Lösungs- bzw. Dispergiermittel wird zweckmäßigerweise in einer speziellen Zone ausgefroren, die zwischen Gefriertrocknungsraum und der Pumpe liegt, die in dem Gefriertrocknungaraum das notwendige Vakuum erzeugt.

In der ersten Zone im Gofriertrocknungsraum wird zweckmäßigerweise ein Luftdruck < 0,1 mbar eingestellt, wobei in einer bevorzugten Ausführungsform die Temperatur tiefer als -10°C ist. In dem Nachtrocknungsabscbnitt kann der gleiche oder ein geringerer Druck eingestellt werden, während die Temperatur gegebenenfalls höher sein kann und in einer bevorzugten Ausführungsform bis 20°C betragen kann. In einer besonders bevorzugten Ausführungsform werden die Dispersionen oder Lösungen zur Gewinnung der Pulver hergestellt gemäß europäischer Patentschrift EP-B-0 440 957, Seite 3, Zeile 15 bis Seite 4, Zeile 16 durch oxidative Polymerisation von Thiophenen mit für die oxidative Polymerisation übliche Oxidationsmitteln und/oder Sauerstoff oder Luft in Gegenwart von Polystyrolsulfonsäure, bevorzugt in wässrigem Medium, bei Temperaturen von 0 bis 100°C. Durch die oxidative Polymerisation erhalten die Polythiophene positive Ladungen.

Zur Polymerisation werden die Thiophene, Polystyrolsulfonsäure und Oxidationsmittel in einem organischen Lösungsmittel oder - vorzugsweise - in Wasser gelöst und die Lösung solange bei der vorgesehenen Polymerisationstemperatur gerührt, bis die Polymerisation abgeschlossen ist.

Bei Verwendung von Luft oder Sauerstoff als Oxidationsmittel wird in die Thiophen, Polystyrolsulfonsäure und gegebenenfalls katalytische Mengen an Metallsalzen enthaltende Lösung solange Luft oder Sauerstoff eingeleitet, bis die Polymerisation abgeschlossen ist.

In Abhängigkeit von Ansatzgröße, Polymerisationstemperatur und Oxidationsmittel kann die Polymerisationszeit zwischen wenigen Minuten bis zu mehreren Stunden betragen. Im allgemeinen liegt die Zeit zwischen 30 Minuten und 10 Stunden. Die Stabilität der Dispersionen lässt sich durch während oder nach der Polymerisation zugefügte Dispergatoren wie Dodecylsulfonat verbessern.

Als Oxidationsmittel können die für die oxidative Polymerisation von Pyrrol geeigneten Oxidationsmittel verwendet werden; diese sind beispielsweise in J. Am. Chem. Soc. 85, 454 (1963) beschrieben. Bevorzugt sind aus praktischen Gründen preiswerte und leicht handhabbare Oxidationsmittel, z.B. Eisen-III-Salze wie FeCl₃ Fe(CIO₄)₃ und die Eisen-III-Salze organischer Säuren und organische Reste aufweisender anorganischer Säuren, ferner H₂O₂, K₂Cr₂O₇, Alkali- und Ammoniumpersulfate, Alkaliperborate, Kaliumpermanganat und Kupfersalze, wie Kupfertetrafluoroborat, Außerdem wurde gefunden, dass sich Luft und Sauerstoff, gegebenenfalls in Gegenwart katalytischer Mengen Metallionen, wie Eisen-, Cobalt-, Nickel-, Molybdän-- und Vanadiumionen, mit Vorteil als Oxidationsmittel verwenden lassen.

Die Verwendung der Persulfate und der Eisen-III-Salze organischer Säuren und der organische Reste aufweisenden anorganischen Sauren hat den großen anwendungstechnischen Vorteil, dass sie nicht korrosiv wirken.

Als Eisen-III-Salze organische Reste aufweisender anorganischer Säuren seien beispielsweise die Eisen-III-Salze der Schwefelsaurehalbester von C₁-C₂₀-Alkanolen, z.B. das Fe-III-Salz des Laurylsulfates genannt.

Als Eisen-III-Salze organischer Säuren seien beispielsweise genannt; die Fe-III-Salze von C₁-C₂₀-Alkylsulfonsäuren, wie der Methan- und der Dodecansulfonsäure; aliphatischen C₁-C₂₀-Carbonsäuren wie der 2-Ethylhexylcarbonsäure; aliphatischen Perfluorcarbonsäuren, wie der Trifluoressigsäure und der Perfluoroctansäure; aliphatischen Dicarbonsäuren, wie der Oxalsäure und vor allem von aromatischen, gegebenenfalls durch C₁-C₂₀-Alkylgruppen substituierten Sulfonsäuren wie der Benzolsulfonsäure, p-Toluolsulfonsäure und der Dodecylbenzolsulfonsäure.

Es können auch Gemische dieser vorgenannten Fe-III-Salze organischer Säuren eingesetzt werden.

Für die oxidative Polymerisation der Thiophene werden theoretisch je Mol Thiophen 2,25 Äquivalente Oxidationsmittel benötigt (siehe z.B. J. Polym. Sc. Part A Polymer Chemistry Vol. 26, S. 1287 (1988)).

Vorzugsweise wird das Oxidationsmittel jedoch in einem gewissen Überschuss, z.B. einem Überschuss von 0,1 bis 2 Äquivalenten je Mol Thiophen angewendet.

Bei der oxidativen Polymerisation wird die erfindungsgemäß zu verwendende Polystyrolsulfonsäure in einer solchen Menge eingesetzt, dass auf 1 Mol Thiophen 0,25 bis 10, vorzugsweise 0,8 bis 8, Säuregruppen der Polystyrolsulfonsäure entfallen.

Für die oxidative Polymerisation werden die Thiophene und die Polystyrolsulfonsäure in einer solchen Menge Lösungsmittel gelöst, so dass stabile Polythiophen-Dispersionen erhalten werden, deren Feststoffgehalt vorzugsweise zwischen 0,5 und 55 Gew.%, vorzugsweise 5 bis 30 Gew.%, beträgt.

Das polyanionische Polymer P ist vorzugsweise eine Polystyrolsulfonsäure oder ein Salz davon mit einem Molekulargewicht von vorzugsweise 1 000 bis 2 000 000, besonders bevorzugt 2 000 bis 500 000. Die Polystyrolsulfonsäure ist im Handel erhältlich oder nach bekannten Verfahren herstellbar (siehe Houben-Weyl, Methoden der organischen Chemie, Bd. E 20 Makromolekulare Stoffe, Teil 2, (1987), S. 1141ff).

Die nach dem erfindungsgemäßen Verfahren herstellbaren Pulver sind dispergierbar, d.h. sie können in einem Dispergiermedium, insbesondere Wasser gegebenenfalls unter Zusatz von mit Wasser mischbaren Lösemitteln zu Lösungen oder Dispersionen verarbeitet werden.

Nach der Dispergierung können die erfindungsgemäßen Pulver als Dispersionen oder Lösungen zur Herstellung von elektrischen leitfähigen oder antistatischen Beschichtungen verwendet werden z.B. durch Tränken, Besprühen, Tiefdruck, Rakeln oder Streichen. Nach dem Entfernen des Dispergiermediums, z.B. des Wassers liegt unmittelbar die von dem Polythiopen auf dem behandelten Formteil gebildete, von der Luftfeuchtigkeit unabhängige elektrische leitfähige oder antistatische Schicht vor.

Die erhaltenen Dispersionen können nach intensivem Rühren bzw. mittels üblicher Dispersionsverfahren erhalten werden und zeichnet sich dadurch aus, dass sie bereits ohne Filtration Partikel von deutlich unter 1 µm enthalten, und klar, d.h. nicht getrübt, sind.

Die Pulver lassen sich weiterhin zu Pasten verarbeiten, die beispielsweise auf Oberflächen zur Erzielung antistatischer Ausrüstungen aufgetragen werden.

Geeignete Einsatzgebiete sind z.B. die Ausrüstung von Kunststofffolien für die Verpackung elektronischer Bauteile und für Reinraumverpackungen, antistatische Ausrüstung von Kathodenstrahlröhren, antistatische Ausrüstung von photographischen Filmen, als transparente Elektroden, z.B. für Touch Screens und organische oder anorganische Elektrolumineszenzanzeigen, für die Herstellung von Kondensatoren, Batterien, Leiterplatten oder von elektrisch einfärbbaren Fensterscheiben.

Vor Herstellung der Beschichtungen können den erfindungsgemäßen Polythiophen-Dispersionen Bindemittel und/oder Vernetzer wie Polyurethane bzw. Polyurethandispersionen, Polyacrylate, Polyolefindispersionen, Epoxisilane wie 3-Glycidoxypropyltrialkoxysilan, zugesetzt werden. Weiterhin können Silanhydrolysate z.B. auf Basis von Tetraethoxysilan zur Erhöhung der Kratzfestigkeit bei Beschichtungen zugesetzt werden.

Die Herstellung der Beschichtungen erfolgt nach bekannten Verfahren wie Tränken, Sprühen, Rakeln, Tiefdruck, Offsetdruck, Vorhanggießen, Auftrag über Antragwalzen, Streichen usw..

### Beispiel 1

Gemäß Beispiel 2 der EP-B-0 440 957 wird eine Dispersion mit wiederkehrenden Thiopheneinheiten hergestellt und gemäß den nachstehenden Beispielen gefriergetrocknet.

### Beispiel 1.1

Nach dem Bulk-Gefriertrocknungsverfahten wird die Dispersion in Glaskolben eingefüllt und auf einer gekühlten Stahlplatte bei -50°C eingefroren bei einer Kühlrate von 1°C/min. Die Haupttrocknung erfolgt bei einem Druck von 0,05 mbar und einer Temperatur von -20°C, die Nachtrocknung bei 0,03 mbar und +10°C.

Man erhält ein voluminöses Pulver, welches in Wasser redispergierbar ist.

### Beispiel 1.2

Die Dispersion wird in Flüssigstickstoff eingetropft. Die schockgeforenen Granulate werden auf Schälchen in einen Gefriertrockner eingetragen. Die Trocknung erfolgt unter den gleichen Bedingungen wie in Beispiel 1.1. Wiederum wird ein redispergierbares Pulver erhalten.

## Patentansprüche

1. In Wasser dispergierbares Pulver enthaltend im Wesentlichen Polymerteilchen T mit wiederkehrenden Thiopheneinheiten und mindestens ein weiteres polyanionisches Polymer P, **dadurch gekennzeichnet, dass** die Teilchengröße des Pulvers kleiner als 1 µm ist.

2. Pulver nach Anspruch 1, **dadurch gekennzeichnet, dass** die Polymerteilchen mit wiederkehrenden Thiopheneinheiten erhalten werden durch Polymerisation von Thiophenen der allgemeinen Formel 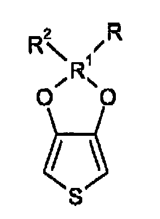 in der
R¹ für einen gegebenenfalls substituierten Alkylenrest mit 1 bis 10 Kohlenstoffatomen und
R und R² gleich oder verschieden für Wasserstoff, einen linearen oder verzweigten Alkylrest mit 1 bis 20 Kohlenstoffatomen, OH, O-CH₂-CH₂-CH₂-SO₃H oder O-Alkyl mit 1 - 18 C-Atomen stehen.

3. Pulver nach wenigstens einem der vorhergehenden Ansprüche, **dadurch gekennzeichnet, dass** das Polymer P Polystyrolsulfonsäure ist.

4. Verfahren zum Herstellen von redispergierbaren Pulvern gemäß Anspruch 1, **dadurch** gekennzeichet, dass man eine Dispersion oder Lösung enthaltend Polymere mit wiederkehrenden Thiopheneinheiten und mindestens eine oder mehrere Sulfonsäuregruppen enthaltende polymere Verbindungen gefriertrocknet.

5. Verfahren nach Anspruch 4, **dadurch gekennzeichnet, dass** die Dispersion oder Lösung in eine Tropfenform überführt, eingefroren und dann gefriergetrocknet wird.

6. Verfahren nach Anspruch 4, **dadurch gekennzeichnet, dass** die Lösung oder Dispersion durch eine Düse zerstäubt wird.

7. Verfahren nach Anspruch 4, **dadurch gekennzeichnet, dass** die Lösung oder Dispersion gerillt wird.

8. Verfahren nach Anspruch 4, **dadurch gekennzeichnet, dass** die Lösung oder Dispersion eingefroren, mechanisch zerteilt und dann gefriergetrocknet wird.

9. Verfahren nach Anspruch 4, **dadurch gekennzeichnet, dass** die Lösung oder Dispersion auf eine gekühlte Walze (Schuppenwalze) aufgetragen wird.

10. Verwendung der Pulver gesäß Anspruch 1 zur Herstellung leitfähiger Beschichtungen.

11. Verwendung der Pulver gemäß Anspruch 1 zur Herstellung leitfähiger Formmassen.

12. Verwendung der Pulver nach Anspruch 10 durch Eincompoundieren der Pulver in Formmassen, vorzugsweise aus Polycarbonat, Polyamid, Polyurethan, Polyacrylnitril oder einem Polyalkylen.

## Claims

1. Water-dispersible powder comprising substantially polymer particles T with recurring thiophene units and at least one further polyanionic polymer P, **characterized in that** the particle size of the powder is smaller than 1 µm.

2. Powder according to claim 1, **characterized in that** the polymer particles with recurring thiophene units are obtained by polymerization of thiophenes of the general formula 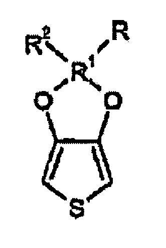 in which
R¹ represents an optionally substituted alkylene radical having 1 to 10 carbon atoms and
R and R² are identical or different and represent hydrogen, a linear or branched alkyl radical having 1 to 20 carbon atoms, OH, O-CH₂-CH₂-CH₂-SO₃H or O- alkyl having 1 - 18 C atoms.

3. Powders according to at least one of the preceding claims, **characterized in that** the polymer P is polystyrenesulphonic acid.

4. Process for the preparation of redispersible powders according to claim 1, **characterized in that** a dispersion or solution comprising polymers with recurring thiophene units and at least one or more polymeric compounds comprising sulphonic acid groups are freeze-dried.

5. Process according to claim 4, **characterized in that** the dispersion or solution is converted into a drop form, frozen and then freeze-dried.

6. Process according to claim 4, **characterized in that** the solution or dispersion is atomized through a nozzle.

7. Process according to claim 4, **characterized in that** the solution or dispersion is prilled.

8. Process according to claim 4, **characterized in that** the solution or dispersion is frozen, comminuted mechanically and then freeze-dried.

9. Process according to claim 4, **characterized in that** the solution or dispersion is applied to a cooled roll (flaking roll).

10. Use of the powders according to claim 1 for the production of conductive coatings.

11. Use of the powders according to claim 1 for the production of conductive moulding compositions.

12. Use of the powders according to claim 10 by compounding the powders into moulding compositions, preferably of polycarbonate, polyamide, polyurethane, polyacrylonitrile or a polyalkylene.

## Revendications

1. Poudre dispersible dans l'eau, contenant essentiellement des particules de polymère T avec des unités répétitives de thiophène et au moins un autre polymère polyanionique P, **caractérisée en ce que** la taille des particules de la poudre est inférieure à 1 µm.

2. Poudre selon la revendication 1, **caractérisée en ce que** les particules de polymère avec des unités répétitives de thiophène sont obtenues par polymérisation de thiophènes de la formule générale 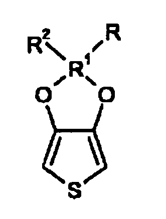 dans laquelle
R¹ représente un radical alkylène, substitué le cas échéant, avec 1 à 10 atomes de carbone et
R et R² sont identiques ou différents et représentent un hydrogène, un radical alkyle li- néaire ou ramifié avec 1 à 20 atomes de carbone, un OH, un O-CH₂-CH₂-CH₂- SO₃H ou un O-alkyle avec 1 à 18 atomes de carbone.

3. Poudre selon l'une au moins des revendications précédentes, **caractérisée en ce que** le polymère P est l'acide polystyrène sulfonique.

4. Procédé pour la préparation de poudres redispersibles selon la revendication 1, **caractérisé en ce que** l'on lyophilise une dispersion ou une solution contenant des polymères avec des unités répétitives de thiophène et des composés polymères contenant au moins un ou plusieurs groupes acides sulfoniques.

5. Procédé selon la revendication 4, **caractérisé en ce que** la dispersion ou la solution est mise dans une forme de goutte, est congelée puis est lyophilisée.

6. Procédé selon la revendication 4, **caractérisé en ce que** la solution ou la dispersion est pulvérisée à travers une buse.

7. Procédé selon la revendication 4, **caractérisé en ce que** la solution ou la dispersion est prillée.

8. Procédé selon la revendication 4, **caractérisé en ce que** la solution ou la dispersion est congelée, fragmentée mécaniquement, puis lyophilisée.

9. Procédé selon la revendication 4, **caractérisé en ce que** la solution ou la dispersion est appliquée sur un cylindre refroidi (cylindre à écailler).

10. Utilisation des poudres selon la revendication 1 pour la production de revêtements conducteurs.

11. Utilisation des poudres selon la revendication 1 pour la production de masses à mouler conductrices.

12. Utilisation des poudres selon la revendication 10 par incorporation des poudres par compoundage dans des masses à mouler, de préférence de polycarbonate, de polyamide, de polyuréthane, de polyacrylonitrile ou d'un polyalkylène.
